# EUROPEAN PATENT APPLICATION

(11) **EP 2 717 130 A1**
(43) Date of publication of application: **09.04.2014**
(21) Application number: 12794151.6
(22) Date of filing: 02.05.2012
(51) Int. Cl.: G06F 3/041

(54) **INPUT DEVICE, INPUT DEVICE CONTROL METHOD, AND PROGRAM**

(30) Priority: 02.06.2011 JP 2011124275
(71) Applicant: NEC CASIO Mobile Communications, Ltd., Kawasaki-shi Kanagawa 211-8666 (JP)
(72) Inventor: NIWA, Sohei, Kawasaki-shi Kanagawa 211-8666 (JP)
(74) Representative: Vossius & Partner
(86) International application number: PCT/JP2012/061605
(87) International publication number: WO 2012/165098

(57) **Abstract**

An input device according to the present invention includes a touch panel that has an input region that detects contact by input means, the input region having a friction area, a friction coefficient of the friction area being different from that of other areas of the input region, and outputs a signal corresponding to a position of a contact point of the input means; a storage section that stores processing amounts corresponding to amounts by which the contact point has moved on the friction area; and a control section that performs a process corresponding to a processing amount that is stored in the storage section and that corresponds to an amount by which the contact point has moved, when the position of the contact point represented by a signal that is output from the touch panel has been moved on the friction area.

## Description

### TECHNICAL FIELD

The present invention relates to input device having a touch panel; a control method for input device; and a program.

### BACKGROUND ART

Some information processing devices such as mobile phones have a touch panel that detects contact by an input means such as a finger or a stylus pen. The input operation to such information processing device is performed such that the input means comes in contact with the touch panel. For example, Patent Literature 1 (JP5-75837U, Publication) discloses information processing device that have a touch panel, and when a slide operation is executed, in which a contact point, at which the input means comes into contact with the touch panel, is caused to slide, adjusts the output sound volume or the like that corresponds to the amount by which the contact point moved.

### RELATED ART LITERATURE

Patent Literature 1: JPS-75837U, Publication

### DISCLOSURE OF THE INVENTION

In the information processing device disclosed in Patent Literature 1, it is necessary to adjust the amount by which the contact point moved in order to adjust the output sound volume or the like. An input region, in which contact by an input means on the touch panel is detected, is generally formed such that the friction coefficient is almost sufficiently uniform to allow the input means to slide smoothly, and is not designed to allow the user to easily recognize the amount by which the contact point moved. Thus, a problem arises in which it is difficult for the user to adjust the amount by which the contact point moved based on the feeling that the user senses during the slide operation or the like.

An object of the present invention is to provide an input device having a touch panel; a control method of the input device, and a program such that the usability of the input operation executed by the input device through the touch panel is improved.

### SUMMARY OF THE INVENTION

To achieve the above described object, an input device according to the present invention includes:
a touch panel that has an input region that detects contact by input means, the input region having a friction area, a friction coefficient of the friction area being different from that of other areas of the input region, and that outputs a signal corresponding to a position of a contact point of the input means;
a storage section that stores processing amounts corresponding to the amounts by which the contact point has moved on the friction area; and
a control section that performs a process corresponding to a processing amount stored in the storage section corresponding to an amount by which the contact point has moved, when the position of the contact point represented by a signal that is output from the touch panel has been moved on the friction area.

To achieve the above described object, a control method of an input device according to the present invention is a control method of an input device having a touch panel that detects contact by input means and that outputs a signal corresponding to a position of a contact point of the input means includes:
storing processing amounts corresponding to amounts by which the contact point has moved on a friction area formed in an input region that detects contact by the input means, a friction coefficient of the friction area being different from that of other areas of the input region; and
when the position of the contact point represented by the signal that is output from the touch panel has been moved on the friction area, performing a process corresponding to a stored processing amount that corresponds to an amount by which the contact point has moved.

To achieve the above described object, a program according to the present invention is a program that causes an input device having a touch panel that detects contact by input means and that outputs a signal corresponding to a position of a contact point of the input means to execute processes includes:
storing processing amounts corresponding to amounts by which the contact point has moved on a friction area formed in an input region that detects contact by the input means, a friction coefficient of the friction area being different from that of other areas of the input region; and
when the position of the contact point represented by the signal that is output from the touch panel has been moved on the friction area, performing a process corresponding to a stored processing amount that corresponds to an amount by which the contact point has moved.

According to the present invention, the usability of the input operation executed by the input device through the touch panel can be improved.

### BRIEF DESCRIPTION OF DRAWINGS

Fig. 1 is a block diagram showing the structure of an input device according to an embodiment of the present invention.
Fig. 2 is an upper view showing a touch panel shown in Fig. 1.
Fig. 3 is a schematic diagram showing an example of the structure of a friction area shown in Fig. 1.
Fig. 4 is a schematic diagram showing an example of the movement of the contact point between the touch panel and the input means shown in Fig. 1.
Fig. 5 is a schematic diagram describing an example of the operation of the input device shown in Fig. 1.
Fig. 6 is a schematic diagram showing an example of the movement of the contact point between the touch panel and the input means shown in Fig. 1.
Fig. 7 is a schematic diagram describing another example of the operation of the input device shown in Fig. 1.
Fig. 8 is a schematic diagram showing another example of the movement of the touch point between the touch panel and the input means shown in Fig. 1.
Fig. 9 is a schematic diagram describing a further example of the operation of the input device shown in Fig. 1.
Fig. 10 is a schematic diagram showing another example of the structure of the friction area shown in Fig. 3.

### EXEMPLARY EMBODIMENT

In the following, an exemplary embodiment for carrying out the present invention will be described with reference to the drawings.

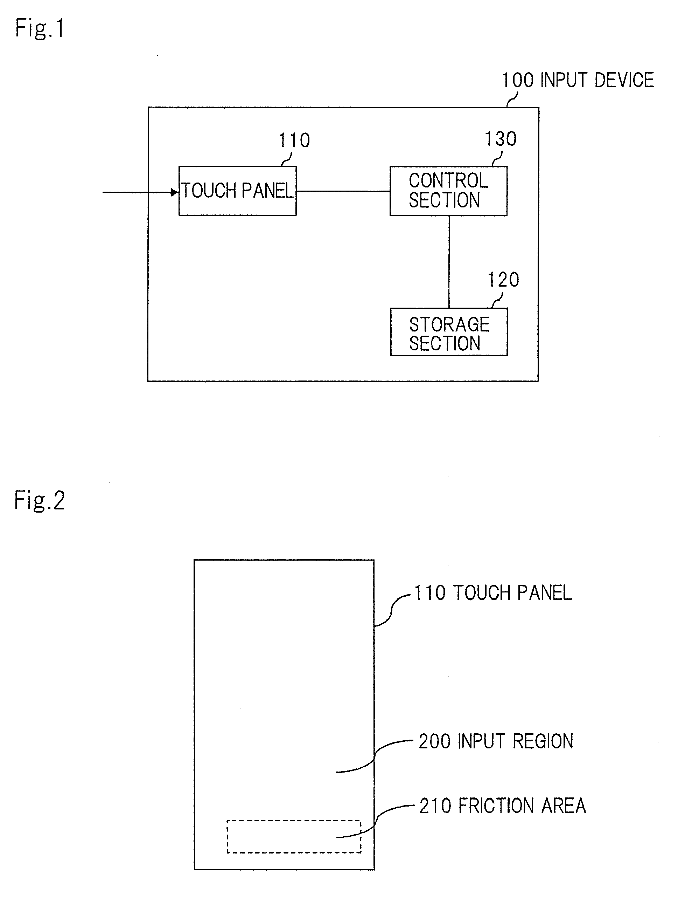

Fig. 1 is a block diagram showing the structure of input device 100 according to an embodiment of the present invention. Input device 100 is applied to information processing devices which have a touch panel, such as mobile phones, smartphones, personal computers, and portable game machines.

Input device 100 shown in Fig. 1 has touch panel 110, storage section 120, and control section 130.

Touch panel 110 detects contact by an input means and outputs a signal corresponding to the position of the contact point of the input means to control section 130. As shown in Fig. 2, touch panel 110 has input region 200 that detects contact by the input means. In input region 200, friction area 210 having a higher friction coefficient than the other areas of input region 200 is formed. The friction coefficient of friction area 210 is sufficiently high to allow the user to adequately sense any friction force when the user performs a slide operation or the like on friction area 210.

Storage section 120 stores processing amounts corresponding to the amounts by which the contact point moved on friction area 210.

If the position of the contact point represented by the signal that is output from touch panel 110 is moved on friction area 210, control section 130 performs a process corresponding to a processing amount stored in storage section 120 corresponding to the amount by which the contact point moved. Information pertaining to the positions of friction area 210 has been stored, for example, in storage section 120. Control section 130 determines whether or not the position of the contact point represented by the signal that is output from touch panel 110 is on friction area 210 based on the information stored in storage section 120. If the position of the contact point represented by the signal that is output from touch panel 110 is outside of friction area 210, control section 130 performs a process corresponding to the position of the contact point.

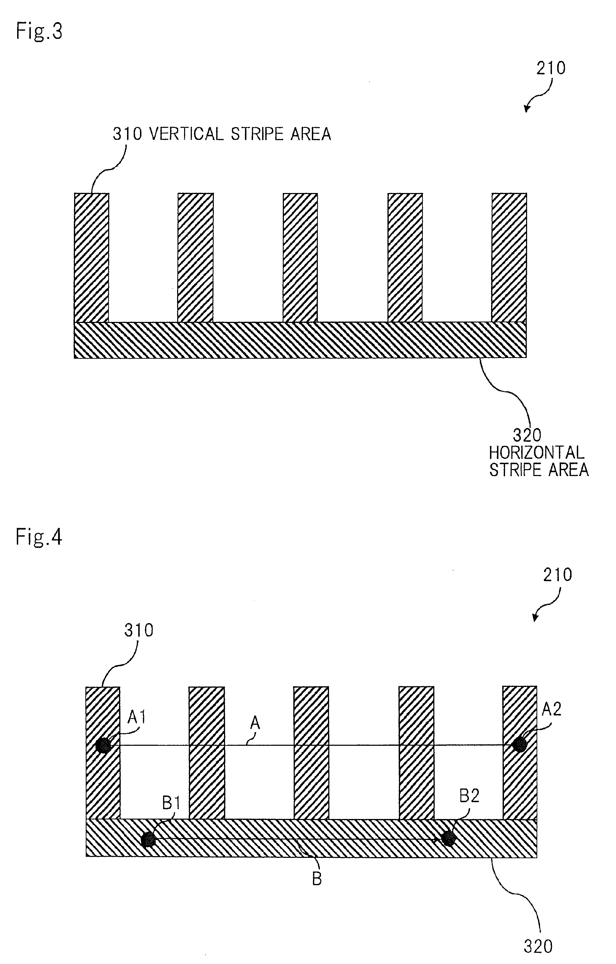

Fig. 3 is an upper view showing the structure of friction area 210.

As shown in Fig. 3, vertical stripe area 310 is formed as friction area 210 in a pattern of stripes along a predetermined direction. In addition, horizontal stripe area 320 is formed such that it extends in a predetermined direction. Vertical stripe area 310 and horizontal stripe area 320 are formed such that their friction coefficients are different from those of the other areas of input region 200. In other words, vertical stripe area 310 and horizontal stripe area 320 are formed such that they have high friction coefficients that are sufficient to allow the user to adequately sense a friction force when the user performs a slide operation or the like on vertical stripe area 310 and horizontal stripe area 320.

Next, an example of the operation of input device 100 according to this embodiment will be described. In the following, it is assumed that the sound volume is adjusted on input device 100.

Storage section 120 stores processing amounts corresponding to the vertical stripes of vertical stripe area 310 as processing amounts corresponding to the amounts by which the contact point moved on friction area 210. According to this embodiment, storage section 120 stores processing amounts corresponding to the amounts by which the contact point moved such that when the contact point is moved for one vertical stripe of vertical stripe area 310, the sound volume is increased or decreased by 10 % of the maximum value.

In addition, storage section 120 stores a processing amount corresponding to a predetermined amount by which the contact point moved on horizontal stripe area 320. According to this embodiment, storage section 120 stores the processing amount corresponding to the predetermined amount by which the contact point moved on horizontal stripe area 320 such that the processing amount is smaller than that on other than friction area 210 of input region 200.

Fig. 4 is a schematic diagram showing the movement of the contact point.

As shown by arrow A, it is assumed that a slide operation that moves the contact point from start point A1 to end point A2 has been performed.

Control section 130 counts the number of vertical stripes through which the contact point has passed based on the movement of the position of the contact point represented by the signal that is output from touch panel 110. As shown by arrow A, the contact point has passed rightward through four vertical stripes. As a result, control section 130 determines a processing amount by multiplying the processing amount corresponding to the amount by which the contact point moved for one vertical stripe (the processing amount for which the sound volume is increased by 10 % of the maximum value) by four, and increases the sound volume corresponding to the determined processing amount (the processing amount for which the sound volume is increased by 40 % of the maximum value). According to this embodiment, it is assumed that when the contact point is moved rightward, the sound volume is increased and that when the contact point is moved leftward, the sound volume is decreased.

As described above, vertical stripe area 310 is formed such that it has a high friction coefficient that is sufficient to allow the user to sense a friction force when the user performs a slide operation on vertical stripe area 310. Thus, whenever the input means passes through vertical stripe area 310, the user can sense that the input means has passed through vertical stripe area 310, and accurately adjust the processing amount corresponding to the number of vertical stripes of vertical stripe area 310 through which the input means has passed.

Next, as shown by arrow B, it is assumed that a slide operation that moves the contact point from start point B1 to end point B2 on horizontal stripe area 320 has been performed.

Control section 130 identifies the amount by which the contact point moved on horizontal stripe area 320 based on the movement of the position of the contact point represented by the signal that is output from touch panel 110. Thereafter, control section 130 determines the processing amount based on the processing amount stored in storage section 120 corresponding to the predetermined amount by which the contact point moved on horizontal stripe area 320 and identified moving amount of the contact point, and increases the sound volume corresponding to the determined processing amount.

As described above, horizontal stripe area 320 is formed such that it has a high friction coefficient that is sufficient to allow the user to sense a friction force when the user performs a slide operation on horizontal stripe area 320. Thus, the user can sense that the user is performing a slide operation on horizontal stripe area 320. The processing amount corresponding to the predetermined amount by which the contact point moved on horizontal stripe area 320 is smaller than that on other than friction area 210 of input region 200. Thus, when the user performs a slide operation on horizontal stripe area 320, the user can finely adjust the processing amount.

Next, another example of the operation of input device 100 will be described.

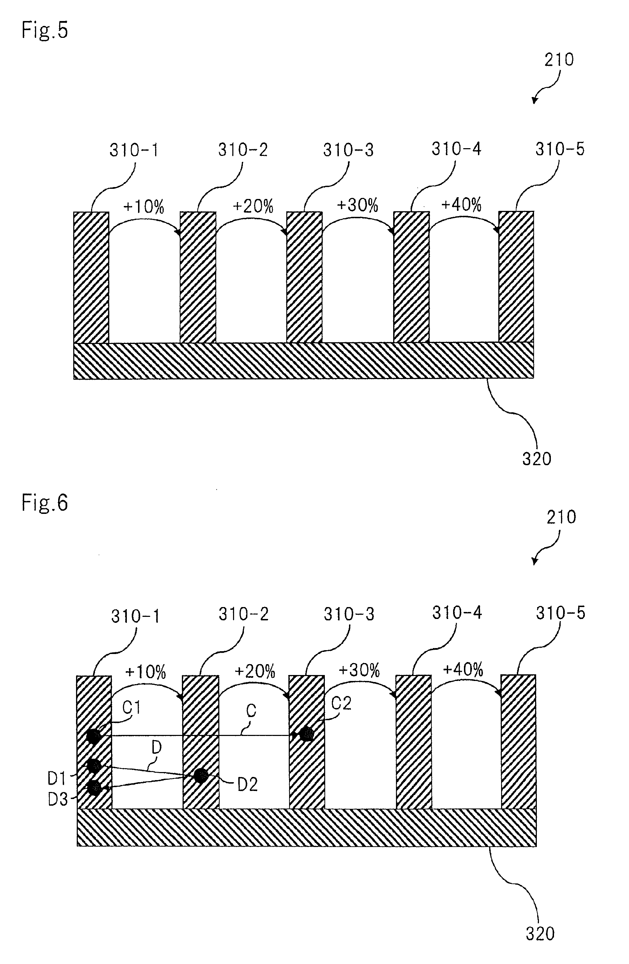

According to this embodiment, as shown in Fig. 5, storage section 120 stores processing amounts corresponding to the amount by which the contact point has moved from vertical stripe 310-1 to vertical stripe 310-5 such that when the contact point is moved from vertical stripe 310-1 to vertical stripe 310-2, the sound volume is increased by 10 % of the maximum value; when the contact point is moved from vertical stripe 310-2 to vertical stripe 310-3, the sound volume is increased by 20 % of the maximum value; when the contact point is moved from vertical stripe 310-3 to vertical stripe 310-4, the sound volume is increased by 30 % of the maximum value; and when the contact point is moved from vertical stripe 310-4 to vertical stripe 310-5, the sound volume is increased by 40 % of the maximum value. In other words, the processing amount corresponding to each vertical stripe increases as the contact point is moved rightward from vertical stripe 310-1 to vertical stripe 310-5.

Fig. 6 is a schematic diagram showing the movement of the contact point.

As shown by arrow C, it is assumed that a slide operation that moves the contact point from start point C1 on vertical stripe 310-1 to end point C2 on vertical stripe 310-3 has been performed.

Control section 130 identifies that the contact point has been moved from vertical stripe 310-1 to vertical stripe 310-3 based on the movement of the position of the contact point represented by the signal that is output from touch panel 110, determines the processing amount by adding the processing amount corresponding to the amounts by which the contact point has moved from vertical stripe 310-1 to vertical stripe 310-2 (the processing amount for which the sound volume is increased by 10 % of the maximum value) stored in storage section 120 and the processing amount corresponding to the movement of the contact point from vertical stripe 310-2 to vertical stripe 310-3 (the processing amount for which the sound volume is increased by 20 % of the maximum value) stored in storage section 120, and increases the sound volume corresponding to the determined processing amount (the processing amount for which the sound volume is increased by 30 % of the maximum value).

Next, as shown by arrow D, it is assumed that a slide operation that moves the contact point from start point D1 on vertical stripe 310-1 to point D2 on vertical stripe 310-2 and then moves the contact point to end point D3 on vertical stripe 310-1 has been performed.

Control section 130 identifies that the contact point has made a round trip between vertical stripe 310-1 and vertical stripe 310-2 one time based on the movement of the position of the contact point represented by the signal that is output from touch panel 110, determines the processing amount by multiplying the processing amount corresponding to the amount by which the contact point has moved from vertical stripe 310-1 to vertical stripe 310-2 (the processing amount for which the sound volume is increased by 10 % of the maximum value) by two, and then increases the sound volume corresponding to the determined processing amount (the processing amount for which the sound volume is increased by 20 % of the maximum value). In other words, control section 130 determines the processing amount by multiplying the processing amount corresponding to the amount by which the contact point has moved from vertical stripe 310-1 to vertical stripe 310-2 (the processing amount for which the sound volume is increased by 10 % of the maximum value) by the number of times the contact point has moved between vertical stripe 310-1 and vertical stripe 310-2. Thus, the processing amount can be increased by an increments of 10 %.

Next, another example of the operation of input device 100 will be described.

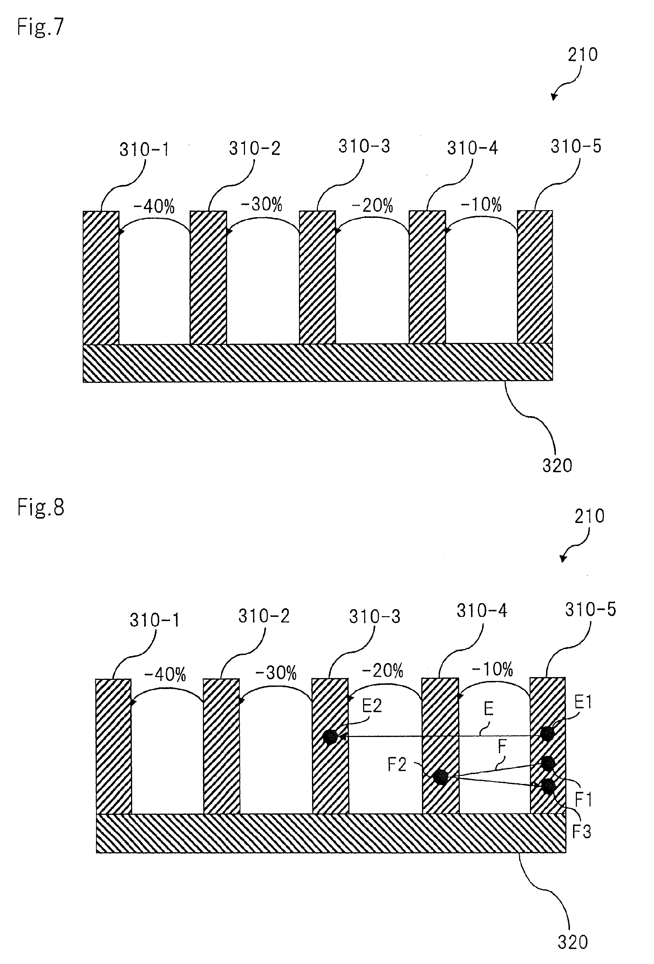

According to this embodiment, as shown in Fig. 7, storage section 120 stores processing amounts corresponding to the amount by which the contact point has moved from vertical stripe 310-5 to vertical stripe 310-1 such that when the contact point is moved from vertical stripe 310-5 to vertical stripe 310-4, the sound volume is decreased by 10 % of the maximum value; when the contact point is moved from vertical stripe 310-4 to vertical stripe 310-3, the sound volume is decreased by 20 % of the maximum value; when the contact point is moved from vertical stripe 310-3 to vertical stripe 310-2, the sound volume is decreased by 30 % of the maximum value; and when the contact point is moved from vertical stripe 310-2 to vertical stripe 310-1, the sound volume is decreased by 40 % of the maximum value. In other words, the processing amount corresponding to each vertical stripe increases as the contact point is moved leftward from vertical stripe 310-5 to vertical stripe 310-1.

Fig. 8 is a schematic diagram showing the movement of the contact point.

As shown by arrow E, it is assumed that a slide operation that moves the contact point from start point C1 on vertical stripe 310-5 to end point C2 on vertical stripe 310-3 has been performed.

Control section 130 identifies that the contact point has been moved from vertical stripe 310-5 to vertical stripe 310-3 based on the movement of the position of the contact point represented by the signal that is output from touch panel 110, determines the processing amount by adding the processing amount corresponding to the amounts by which the contact point has moved from vertical stripe 310-5 to vertical stripe 310-4 (the processing amount for which the sound volume is decreased by 10 % of the maximum value) and the processing amount corresponding to the movement of the touch point from vertical stripe 310-4 to vertical stripe 310-3 (the processing amount for which the sound volume is decreased by 20 % of the maximum value), and decreases the sound volume corresponding to the determined processing amount (the processing amount for which the sound volume is decreased by 30 % of the maximum value).

Next, as shown by arrow F, it is assumed that a slide operation that moves the contact point from start point F1 on vertical stripe 310-5 to point F2 on vertical stripe 310-4 and then moves the contact point to end point F3 on vertical stripe 310-5 has been performed.

Control section 130 identifies that the contact point has made a round trip between vertical stripe 310-5 and vertical stripe 310-4 one time based on the movement of the position of the contact point represented by the signal that is output from touch panel 110, determines the processing amount by multiplying the processing amount corresponding to the movement of the contact point from vertical strip 310-5 to vertical strip 310-4 (the processing amount for which the sound volume is decreased by 10 % of the maximum value) by two, and then decreases the sound volume corresponding to the determined processing amount (the processing amount for which the sound volume is decreased by 20 % of the maximum value). In other words, control section 130 determines the processing amount by multiplying the processing amount corresponding to the movement of the contact point from vertical stripe 310-5 to vertical stripe 310-4 (the processing amount for which the sound volume is decreased by 10 % of the maximum value) by the number of times the contact point has been moved between vertical stripe 310-5 and vertical stripe 310-4. Thus, the processing amount can be decreased by an increments of 10%.

Next, a further example of the operation of input device 100 will be described.

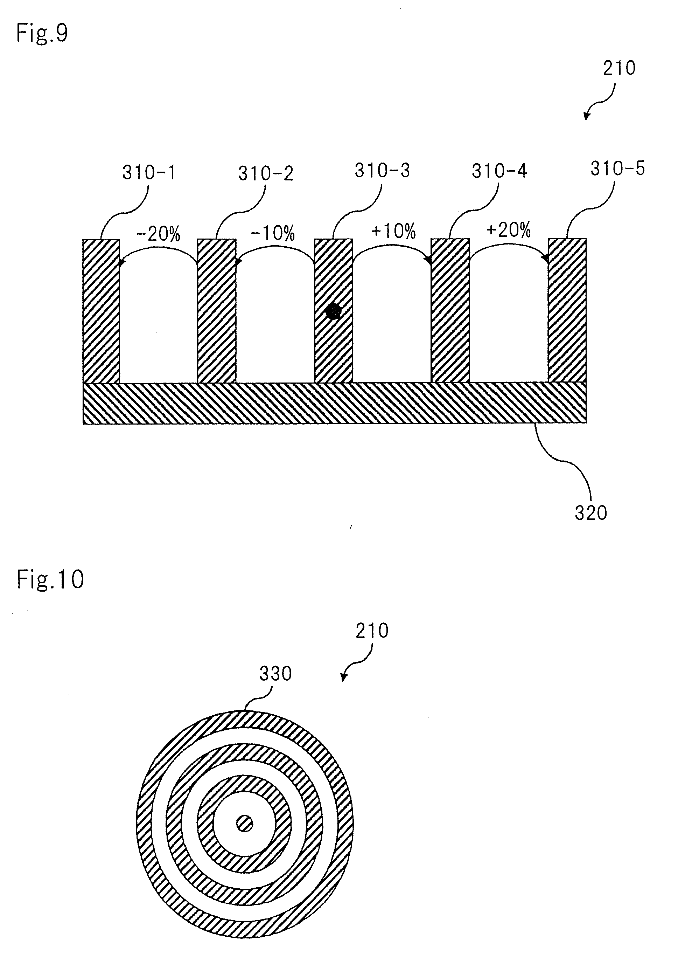

As shown in Fig. 9, it is assumed that vertical stripe 310-3 is touched with an input means.

Control section 130 causes storage section 120 to store a processing amount corresponding to the amount by which the contact point has moved from vertical stripe 310-3 to vertical stripe 310-4 such that when the contact point is moved from vertical stripe 310-3 to vertical stripe 310-4, the sound volume is increased by 10 % of the maximum value; a processing amount corresponding to the amount by which the contact point has moved from vertical stripe 310-4 to vertical stripe 310-5 such that when the contact point is moved from vertical stripe 310-4 to vertical stripe 310-5, the sound volume is increased by 20 % of the maximum value; a processing amount corresponding to the amount by which the contact point has moved from vertical stripe 310-3 to vertical stripe 310-2 such that when the contact point is moved from vertical stripe 310-3 to vertical stripe 310-2, the sound volume is decreased by 10 % of the maximum value; and a processing amount corresponding to the amount by which the contact point has moved from vertical stripe 310-2 to vertical stripe 310-1 such that when the contact point is moved from vertical stripe 310-2 to vertical stripe 310-1, the sound volume is decreased by 20 % of the maximum value. In other words, the processing amount corresponding to each vertical stripe increases rightward and leftward from vertical stripe 310-3.

Thereafter, when a slide operation that moves the contact point leftward or rightward from vertical stripe 310-3, control section 130 determines the processing amount corresponding to the amount by which the contact point has moved and increases or decreases the sound volume corresponding to the determined processing amount.

In the foregoing examples of the operation, the sound volume is adjusted. It should be noted that the present invention is not limited to such examples. In other words, the present invention can be applied to adjustments for reduction and magnification ratios of images displayed on the touch panel and for the amount by which the cursor has moved.

As described above, according to this embodiment, input device 100 has touch panel 110. Touch panel 110 has input region 200 in which friction area 210 that has a higher friction coefficient than the other areas is formed. Processing amounts corresponding to tha amount by which the contact point has moved on friction area 210 are stored. When the position of the contact point represented by the signal that is output from touch panel 110 is moved on friction area 210, a process corresponding to the stored processing amount corresponding to the amount by which the contact point has moved is performed.

Since friction area 210 is formed such that it has a friction coefficient that is sufficient to allow the user to adequately sense a friction force on friction area 210 with an input means, the processing amount can be more accurately or more finely adjusted since the user senses the friction force on friction area 210 with the input means. Thus, the usability of the operation and input for input device 100 performed through the touch panel can be improved.

Moreover, in input device 100 according to this embodiment, the processing amount corresponding to the amount by which the contact point has moved on friction area 210 is smaller than that on other areas of input region 200.

Thus, when the contact point is moved on friction area 210, the processing amount can be more finely adjusted. As a result, the usability of the operation and input for input device 100 performed through the touch panel can be improved.

According to this embodiment, the friction coefficient of friction area 210 is greater than that of the other areas of input region 200. However, the present invention is not limited to such an example. Instead, the friction coefficient of friction area 210 may be smaller than that of the other areas of input region 200.

The structure of friction area 210 is not limited to that shown in Fig. 3. For example, either vertical stripe area 310 or horizontal stripe area 320 may be formed. Alternatively, as shown in Fig. 10, concentric circle area 330 may be formed as friction area 210.

According to this embodiment, when a slide operation that moves the contact point through vertical stripe area 310 is performed, the processing amount is determined corresponding to the number of vertical stripes through which the contact point passes. However, the present invention is not limited to such an example. Alternatively, if the foregoing slide operation is performed while horizontal stripe area 320 is touched with the input means, the processing amount corresponding to the number of horizontal stripes through which the contact point passes may be decided. In contrast, if the foregoing slide operation is performed while horizontal stripe area 320 is not touched with the input means, the same process by which the contact point is moved on other areas of friction area 210 may be performed.

According to this embodiment, friction area 210 is located at one position of input region 200. Alternatively, friction area 210 may be located at a plurality of positions.

In addition, the friction coefficient of friction area 210 may not be uniform.

According to this embodiment, touch panel 110 has input region 200 in which friction area 210 that detects contact by an input means is formed. However, the present invention is not limited to such an example. Alternatively, touch panel 110 may detect the neighbor of an input means. For example, touch panel 110 may be formed such that a transparent panel is located on input region 200 and a friction area is located on the transparent panel. In this case, control section 130 acquires information about the position of the friction area on the panel through an external storage medium, an external network, or the like and determines if the position of the contact point represented by a signal that is output from touch panel 110 is on the friction area of the panel. If the position of the contact point is on the friction area of the panel, the processes for the foregoing examples of the operation are performed. As a result, various panels that correspond can be used corresponding to applications executed on input device 100 can be used.

A method for the input device according to the present invention may be applied to a program executed on a computer. In addition, the program can be stored on a storage medium and can be provided to the outside through a network.

The present invention has been described with reference to the embodiments. However, it should be understood by those skilled in the art that the structure and details of the present invention may be changed in various manners without departing from the scope of the present invention.

The present application claims priority based on Japanese Patent Application JP 2011-124275 filed on June 2, 2011, the entire content of which is incorporated herein by reference in its entirety.

## Claims

1. An input device, comprising:
a touch panel that has an input region that detects contact by input means, said input region having a friction area, a friction coefficient of said friction area being different from that of other areas of said input region, and outputs a signal corresponding to a position of a contact point of said input means;
a storage section that stores processing amounts corresponding to the amounts by which said contact point has moved on said friction area; and
a control section that performs a process corresponding to a processing amount stored in said storage section corresponding to an amount by which the contact point has moved, when the position of said contact point represented by a signal that is output from said touch panel has been moved on said friction area.

2. The input device according to claim 1,
wherein said friction area is formed in a pattern of stripes,
wherein said storage section stores processing amounts corresponding to stripes of said friction area, and
wherein, when the position of said contact point represented by the signal that is output from said touch panel has been moved on said friction area, said control section identifies the number of stripes for which said contact point has been moved; determines a processing amount based on the identified number of stripes for which said contact point has been moved and the processing amount corresponding to stripes of said friction area, and performs a process corresponding to the determined processing amount.

3. The input device according to claim 1,
wherein said friction area is formed such that it extends in a predetermined direction,
wherein said storage section stores a processing amount corresponding to a predetermined amount by which said contact point has moved on said friction area, and
wherein, when the position of said contact point represented by the signal that is output from said touch panel has moved on said friction area, said control section identifies the amount by which said contact point has moved on said friction area, determines a processing amount based on the identified moving amount and the processing amount corresponding to the predetermined amount by which said contact point, in said storage section, has moved, and performs a process corresponding to the determined processing amount.

4. A control method of an input device having a touch panel that detects contact by input means and that outputs a signal corresponding to a position of a contact point of said input means, includes:
storing processing amounts corresponding to amounts by which said contact point has moved on a friction area formed in an input region that detects contact by said input means, a friction coefficient of said friction area being different from that of other areas of said input region; and
when the position of said contact point represented by the signal that is output from said touch panel has been moved on said friction area, performing a process corresponding to a stored processing amount that corresponds to an amount by which said contact point has moved.

5. The control method of the input device according to claim 4,
wherein said storing step is performed by storing processing amounts corresponding to stripes of said friction area, and
wherein said determining step is performed by determining if the position of said contact point represented by the signal that is output from said touch panel has been moved, and if so, deciding the number of stripes for which said contact point has moved, acquiring a processing amount stored corresponding to the number of stripes, and performing a process corresponding to the acquired processing amount.

6. The control method of the input device according to claim 4,
wherein said storing step is performed by storing a processing amount corresponding to a predetermined amount by which said contact point has moved on said friction area formed such that it extends in a predetermined direction, and
wherein said determining step is performed by determining if the position of said contact point represented by the signal that is output from said touch panel has been moved, and if so, identifying the amount by which said contact point has moved on said friction area, acquiring a processing amount based on the decided moving amount and the processing amount stored corresponding to the predetermined amount by which said contact point has moved, and performing a process corresponding to the acquired processing amount.

7. A program that causes an input device having a touch panel that detects contact by input means and that outputs a signal corresponding to a position of a contact point of said input means to execute processes includes:
storing processing amounts corresponding to amounts by which said contact point has moved on a friction area formed in an input region that detects contact by said input means, a friction coefficient of said friction area being different from that of other areas of said input region; and
when the position of said contact point represented by the signal that is output from said touch panel has been moved on said friction area, performing a process corresponding to a stored processing amount that corresponds to an amount by which the contact point has moved.

## Amended claims

### Amended claims under Art. 19.1 PCT

**1.** (Amended) An input device, comprising:
a touch panel that has a first region and a second region respectively having a first friction coefficient and a second friction coefficient that differ from each other and that outputs a signal corresponding to a position of a contact point of input means on said first region or said second region; and
a control section that performs a process corresponding to a first processing amount, when the position of said contact point represented by the signal that is output from said touch panel has been moved on said first region or said second region, and performs a process corresponding to a second processing amount that differs from said first processing amount, when the position of said contact point has been moved on said second region.

**2.** (Amended) The input device according to claim 1,
wherein said second region is formed in a pattern of stripes,
wherein said input device further comprises:
a storage section that stores processing amounts corresponding to stripes of said second region, and
wherein, when the position of said contact point represented by the signal that is output from said touch panel has been moved on said second region, said control section identifies the number of stripes for which said contact point has been moved, determines a processing amount based on the identified number of stripes for which said contact point has been moved and the stored processing amount corresponding to stripe of said second region, and performs a process corresponding to the determined processing amount.

**3.** (Amended) The input device according to claim 1,
wherein said second region is formed such that it extends in a predetermined direction,
wherein said input device further comprises:
a storage section that stores a processing amount corresponding to a predetermined amount by which said contact point has moved on said second region, and
wherein, when the position of said contact point represented by the signal that is output from said touch panel has been moved on said second region, said control section identifies an amount by which said contact point has moved on said second region, determines a processing amount based on the identified moving amount and the processing amount stored in said storage region corresponding to the predetermined moving amount, and performs a process corresponding to the determined processing amount.

**4.** (Amended) A control method of an input device having a touch panel that detects contact by input means and that outputs a signal corresponding to a position of a contact point of input means, includes:
when the position of said contact point, represented by the signal that is output from said touch panel that has a first region and a second region which detect contact by said input means, said first region has a first friction coefficient and said second region has a second friction coefficient that differs from the first friction coefficient, has been moved on said first region, performing a process corresponding to a first processing amount, when the position of said contact point has moved on said second region, performing a process corresponding to a second processing amount that differs from said first processing amount.

**5.** (Amended) The control method for the input device as set forth in claim 4, further comprising:
storing processing amounts corresponding to stripes of said second region,
wherein, when the position of said contact point represented by the signal that is output from said touch panel has been moved on said second region, identifying the number of stripes for which said contact point has been moved, determining a processing amount based on the identified number of stripes for which said contact point has been moved and the stored processing amount corresponding to stripe of said second region, and performing a process corresponding to the determined processing amount.

**6.** (Amended) The control method of the input device according to claim 4, further comprising:
storing a processing amount corresponding to a predetermined amount by which said contact point has moved on said second region formed such that it extends in a predetermined direction,
wherein, when the position of said contact point represented by the signal that is output from said touch panel has been moved on said second region, identifying an amount by which said contact point has moved on said second region, determining a processing amount based on the identified moving amount and the stored processing amount corresponding to the predetermined moving amount, and performing a process corresponding to the determined processing amount.

**7.** (Amended) A program that causes an input device having a touch panel that detects contact by input means and that outputs a signal corresponding to a position of a contact point of input means to execute processes includes:
when the position of said contact point, represented by the signal that is output from said touch panel that has a first region and a second region which detect contact by said input means, said first region has a first coefficient and said second region has a second friction coefficient that differs from the first coefficient, has moved on said first region, performing a process corresponding to a first processing amount, and when the position of said contact point has moved on said second region, performing a process corresponding to a second processing amount that differs from said first processing amount.

**8.** (Added) The input device according to any one of claims 1 to 3,
wherein said second region is surrounded by said first region.
